# EUROPÄISCHE PATENTSCHRIFT

(11) **EP 1 353 831 B1**
(45) Veröffentlichungstag und Bekanntmachung des Hinweises auf die Patenterteilung: **07.05.2008**
(21) Anmeldenummer: 02710018.9
(22) Anmeldetag: 19.01.2002
(51) Int. Cl.: B60T 13/58

(54) **VERFAHREN ZUM EINHALTEN EINES SOLLBREMSMOMENTES**
METHOD FOR MAINTAINING A DESIRED BRAKING TORQUE
PROCEDE PERMETTANT DE RESPECTER UN COUPLE DE FREINAGE THEORIQUE

(30) Priorität: 24.01.2001 DE 10103011
(43) Veröffentlichungstag der Anmeldung: 22.10.2003
(73) Patentinhaber: ZF FRIEDRICHSHAFEN Aktiengesellschaft, 88038 Friedrichshafen (DE)
(72) Erfinder: GRUPP, Bernhard, 88250 Weingarten (DE); REISCH, Bernhard, 88316 Isny (DE); SAUTER, Frank, 88074 Meckenbeuren (DE); SCHMIDTNER, Peter, 88131 Lindau (DE)
(86) Internationale Anmeldenummer: PCT/EP2002/000531
(87) Internationale Veröffentlichungsnummer: WO 2002/058978

(56) Entgegenhaltungen:
- DE-A- 4 420 116
- DE-A- 19 642 344
- DE-A- 19 843 580

## Beschreibung

Die vorliegende Erfindung betrifft ein Verfahren zur Ausnutzung der verschleissfreien Bremssysteme und insbesondere zur Einhaltung eines Sollbremsmomentes eines Kraftfahrzeugs gemäß dem Oberbegriff des Patentanspruchs 1.

Nach dem Stand der Technik werden heutzutage insbesondere bei Nutzfahrzeugen Dauerbremsanlagen (verschleissfreie Bremssysteme) zum Entlasten der Betriebsbremsanlage eingesetzt. Dauerbremsanlagen können außerdem die Wirtschaftlichkeit der Nutzfahrzeuge durch höhere Durchschnittsgeschwindigkeiten (insbesondere bei längeren Bergabfahrten) sowie durch eine deutliche Reduzierung des Verschleißes der Bremsbeläge der Betriebsbremse erhöhen.

Als Dauerbremsen werden Motorbremssysteme eingesetzt, welche im Schubbetrieb ein vom eingelegten Gang abhängiges Bremsmoment liefern. Des weiteren sind zum Umwandeln von kinetischer in Wärmeenergie Retarderbremsen bekannt, die sich durch die Art der Energieumwandlung unterscheiden, wobei bei hydrodynamischen Retardern die Energieumwandlung durch Flüssigkeitsreibung und bei elektrodynamischen Retardern mittels eines Magnetfelds erfolgt. Retarder dienen als nahezu verschleissfreie Dauerbremsen, insbesondere für Nutzfahrzeuge und Bahnantriebe, da sie den Vorzug aufweisen, die abzubremsende Energie ohne Verschleiss über längere Zeiträume in Wärme umzuwandeln.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einer sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Bei elektrodynamischen Retardern wiederum wird zum Bremsen das Prinzip der Kraftwirkung in elektromagnetischen Feldern benutzt. Hierbei ist ein Stator mit mehreren Erregerspulen bestückt und am Getriebegehäuse befestigt. Des weiteren sind getriebeseitig luftgekühlte Rotoren vorgesehen, die üblicherweise mit der Gelenkwelle verbunden sind. Beim Bremsen werden die Erregerspulen mit Strom versorgt. Wenn die Rotoren das magnetische Feld durchlaufen, werden Wirbelströme induziert, die die Drehbewegung der Rotoren hindern.

Je nach Anordnung im Triebstrang werden Retarder in Primärretarder und Sekundärretarder eingeteilt, wobei Primärretarder motorseitig und Sekundärretarder getriebeabtriebsseitig angeordnet sind. Elektrodynamische Retarder werden nach dem Stand der Technik meistens als Sekundärretarder angeordnet. Dies bedeutet, dass Primärretarder in Abhängigkeit von der Motordrehzahl arbeiten, während Sekundärretarder in Abhängigkeit von der Fahrzeuggeschwindigkeit arbeiten.

Des weiteren werden Dauerbrbremssysteme in gestufte und stufenlose Systeme eingeteilt: Gestufte Systeme sind Motorbremsen und die elektrodynamischen Retarder. Im Gegensatz zu den stufenlos einstellbaren Systemen, wie beispielsweise hydrodynamischen Retardern ist die Bremsleistung nur stufenweise einstellbar.

Von besonderer Bedeutung sind Dauerbremsen für den Fall, dass die Geschwindigkeit bergab konstant gehalten werden soll, wobei dies jedoch oft mit Komforteinbußen für den Fahrer verbunden ist.

Hydrodynamische Sekundärretarder haben bei niederen Gelenkwellendrehzahlen ihre Systemgrenzen, d.h. das gelieferte Bremsmoment ist nicht mehr ausreichend. Außerdem ist bei hydrodynamischen Sekundärretardern in der Regel bei hohen Gelenkwellendrehzahlen eine Leistungsbegrenzung oder Leistungsreduzierung zum Schutz des Motorkühlsystems vorgesehen.

Der vorliegenden Erfindung liegt demnach die Aufgabe zugrunde, ein Verfahren zum Einhalten eines Sollbremsmomentes unter optimaler Ausnutzung der verschleissfreien Bremssysteme eines Kraftfahrzeugs anzugeben.

Demnach wird vorgeschlagen, die Stärke der verfügbaren Bremssysteme zu kombinieren (z.B. Hydrodynamischer + elektrischer Sekundärretarder, Hydrodynamischer Sekundärretarder + Motorbremse). Somit können die Schwächen der unterschiedlichen zur Verfügung stehenden Bremssysteme kompensiert werden.

Erfindungsgemäß ist das hier vorgestellte Verfahren für sämtliche Betriebsmodi anwendbar, u.a. bei der Regelung einer konstanten Geschwindigkeit im Gefälle sowie beim Einhalten eines konstanten Bremsmomentes bzw. beim Einhalten einer konstanten Verzögerung.

So kann z.B. die Funktion konstante Geschwindigkeit im Gefälle unter Nutzung mehrerer unabhängig voneinander wirksamen Bremssysteme realisiert werden, wobei gestufte und stufenlos einstellbare Bremssysteme in Kombination wirksam werden. Die beschriebene Funktion kann somit nahezu über den gesamten Geschwindigkeitsbereich abgebildet werden.

Voraussetzung ist die Kenntnis des Bremsverhaltens der unterschiedlichen Systeme. Zu diesem Zweck werden das Systemverhalten der unterschiedlichen Bremssysteme charakterisierende Größen, beispielsweise Kennfelder der Systeme, in einer Steuerung abgelegt, wobei das aktuelle Bremsverhalten gemessen oder berechnet wird.

Durch das erfindungsgemäße Verfahren wird eine Erhöhung der Dauerbremsleistung durch Nutzung von Bremssystemen mit unterschiedlichen Energiehaushalten erzielt.

Des weiteren kann in Kombination mit einem stufenlos einstellbaren Bremssystem auch ein gestuftes Bremssystem ohne Komforteinbuße zur Abbildung der Funktion Konstante Geschwindigkeit im Gefälle genutzt werden.

Die Kombination der Bremssysteme ermöglicht die Ausnutzung der unterschiedlichen Stärken der Systeme; beispielsweise kann an der Leistungsgrenze des hydrodynamischen Sekundärretarder der Primärretarder oder ein elektrischer Sekundärretarder zusätzlich eingesetzt werden.
Im folgenden ist die Erfindung anhand der Zeichnung näher erläutert.
In dieser stellen dar:
- Fig. 1: eine Darstellung der Funktion "Konstante Geschwindigkeit im Gefälle" anhand der Kombination unterschiedlicher verschleißfreier Bremssysteme gemäß der Erfindung und
- Fig. 2: eine Darstellung der Funktion "Konstantes Bremsmoment" und "Konstante Verzögerung" anhand der Kombination unterschiedlicher verschleißfreier Bremssysteme gemäß der Erfindung.

Gemäß der Erfindung wird zum Einhalten einer konstanten Geschwindigkeit im Gefälle ab einem bestimmten erforderlichen Sollbremsmoment ein gestuftes Bremssystem (Motorbremse, elektrodynamischer Sekundärretarder) zugeschaltet und die Differenz zum effektiv erforderlichen Sollbremsmoment mit einem stufenlosen Bremssystem (hydrodynamische Retarder) ausgeregelt.

Erfindungsgemäß erfolgt die Zuschaltung des gestuften Bremssystems, wenn das erforderliche Sollbremsmoment mindestens größer als die Stufe 1 des gestuften Bremssystems ist. Das verbleibende Differenzmoment muß ausreichend groß sein, dass das stufenlose System nicht unmittelbar abschaltet. Ist das erforderliche Gesamtbremsmoment beispielsweise größer als das mit der Stufe 2 des gestuften Bremssystems einstellbare Bremsmoment, so erhöht das gestufte Bremssystem sein Bremsmoment auf die Stufe 2 und das stufenlose Bremssystem reudziert sein Bremsmoment um den gleichen Betrag. Entsprechendes gilt für die anderen Stufen gleichermaßen.

Hierbei kann das gestufte Bremssystem in einer oder mehreren Stufungen zugeschaltet werden.

Die Systemgrenze der Funktion "konstante Geschwindigkeit im Gefälle" wird somit in Richtung niederer Geschwindigkeiten verschoben, kann also über einen größeren Geschwindigkeitsbereich realisiert werden.

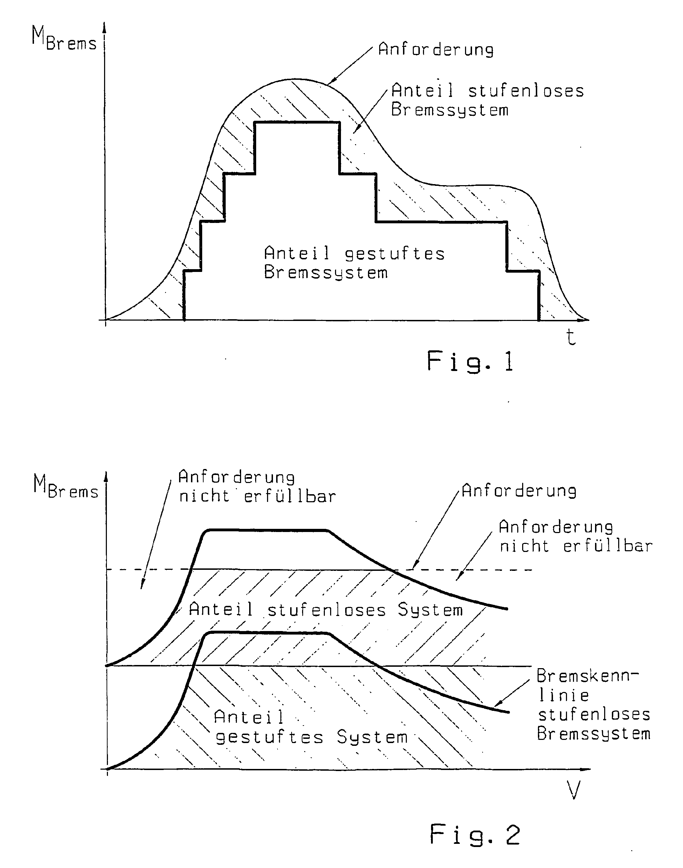

In Fig. 1 ist die Funktionsweise des Verfahrens anhand eines Bremsmoment-Zeit Diagramms erläutert.

In Abhängigkeit vom erforderlichen Bremsmoment M_Brems wird ein gestuftes Bremssystem eingesetzt, unter gleichzeitigem Zuschalten eines stufenlosen Bremssystems, derart, dass die Summe der Anteile der unterschiedlichen Systeme zu jeder Zeit t das erforderliche Bremsmoment ergibt. Die jeweils zuzuschaltende Stufe der gestuften Systeme wird aus dem erforderlichen Bremsmoment berechnet, derart, dass das verbleibende Differenzmoment bzw. der Anteil der stufenlosen Systeme ausreichend groß ist, dass das stufenlose System nicht unmittelbar abschaltet. Damit wird gewährleistet, dass das stufenlose System zum Bremsvorgang beiträgt, um den Komfort für den Fahrer zu erhöhen.

Für die Realisierung der Funktion "Konstantes Bremsmoment" bzw. "Konstante Verzögerung" wird wie im Bremsmoment-Geschwindigkeitsdiagramm aus Fig. 2 verdeutlicht vorgegangen: Auch hier erfolgt die Zuschaltung des gestuften Bremssystems, wenn das erforderliche Sollbremsmoment mindestens größer als die erste Stufe des gestuften Bremssystems ist. Das verbleibende Differenzmoment muß ebenfalls ausreichend groß sein, damit der Anteil des stufenlosen Systems nicht Null wird.

Durch das erfindungsgemäße Verfahren kann die Charakteristik der Primärretarder, Bremsmomentsprünge bei Gangsprüngen zu verursachen, ausgeglichen werden. Ebenso ist es möglich, bei Rückschaltungen im Schubbetrieb das fehlende Bremsmoment während des Schaltvorgangs zu kompensieren, wodurch unabhängig von Schaltvorgängen ein konstantes Bremsmoment oder eine konstante Bremsverzögerung abgebildet wird.

## Patentansprüche

1. Verfahren zum Einhalten eines Sollbremsmomentes für ein mit gestuften und stufenlosen Dauerbremssystemen ausgerüstetes Fahrzeug, **dadurch gekennzeichnet, dass** in Abhängigkeit vom erforderlichen Bremsmoment ein gestuftes Bremssystem unter gleichzeitigem Zuschalten eines stufenlosen Bremssystems eingesetzt wird, derart, dass die Summe der Anteile der unterschiedlichen Systeme zu jeder Zeit das erforderliche Bremsmoment ergibt.

2. Verfahren nach Anspruch 1, **dadurch gekennzeichnet, dass** die jeweils zuzuschaltende Stufe der gestuften Systeme aus dem erforderlichen Bremsmoment berechnet wird, derart, dass das verbleibende Differenzmoment bzw. der Anteil der stufenlosen Systeme ausreichend groß ist, damit dass das stufenlose System nicht unmittelbar abschaltet, wodurch das stufenlose System zum Bremsvorgang beiträgt, um den Komfort für den Fahrer zu erhöhen.

3. Verfahren nach Anspruch 1 oder 2, **dadurch gekennzeichnet, dass** charakterisierende Größen des Systemverhaltens der unterschiedlichen Bremssysteme in einer Steuerung abgelegt werden, wobei das aktuelle Bremsverhalten gemessen oder berechnet wird.

4. Verfahren nach einem der vorangehenden Ansprüche,**dadurch gekennzeichnet, dass** sich das einzuhaltende Sollbremsmoment aus den Funktionen "konstante Geschwindigkeit im Gefälle", "konstantes Bremsmoment" bzw. "konstante Verzögerung" ergibt.

## Claims

1. Method for maintaining a nominal brake torque for a vehicle equipped with stepped and continuously variable continuous service brake systems, **characterized in that** depending on the required brake torque, a stepped brake system with simultaneous engagement of a continuously variable brake system will be employed in such a way that the sum of the shares of these different systems will at all times provide the required brake torque.

2. Method according to claim 1, **characterized in that** the step of the stepped systems to be engaged is calculated on the basis of the required brake torque in such a way that the remaining differential torque or the share of the continuously variable systems is of a sufficient magnitude for the continuously variable system not to shut down and to contribute to the braking action and thus increase the driver's comfort.

3. Method according to claim 1 or 2, **characterized in that** characteristic variables of the system behavior of the different brake systems are filed in a control, with the current brake behavior being measured or calculated.

4. Method according to one of the preceding claims, **characterized in that** the nominal brake torque to be maintained results from the functions "constant downhill speed", "constant brake torque" or "constant deceleration".

## Revendications

1. Procédé assurant le maintien d'un couple de freinage théorique sur un véhicule doté de systèmes de freinage étagés ou à variation continue, **caractérisé en ce que** en fonction du couple de freinage nécessaire, est utilisé un système de freinage étagé, tout en actionnant en même temps un systéme de freinage à variation continue, de façon à ce que de l'addition des parts des différents systèmes résulte, à tout moment, le couple de freinage nécessaire.

2. Procédé selon la revendication 1, **caractérisé en ce que** l'étage des systèmes de freinage étagés respectivement à actionner est calculé sur la base du couple de freinage nécessaire, et cela de façon à ce que le couple différentiel restant ou la part des systèmes de freinage à variation continue est suffisamment élevé pour éviter la coupure immédiate du systéme de freinage à variation continue, ce qui fait que le système de freinage à variation continue contribue au processus de freinage afin d'augmenter le confort pour le conducteur.

3. Procédé selon la revendication 1 ou 2, **caractérisé en ce que** des grandeurs caractérisantes le comportement des différents systèmes de freinage sont stockées dans un boîtier de commande, sachant que le comportement de freinage actuel est mesuré ou calculé.

4. Procédé selon une des revendications précédentes, **caractérisé en ce que** le couple de freinage théorique à respecter résulte des fonctions "vitesse constante en descente", "couple de freinage constant" ou "décélération constante".
